# EUROPEAN PATENT SPECIFICATION

(11) **EP 3 633 215 B1**
(45) Date of publication and mention of the grant of the patent: **07.07.2021**
(21) Application number: 18198260.4
(22) Date of filing: 02.10.2018
(51) Int. Cl.: F16B 19/08

(54) **SELF-PIERCING RIVET**
STANZNIET
RIVET AUTOPERFORANT

(43) Date of publication of application: 08.04.2020
(73) Proprietor: Newfrey LLC, New Britain, CT 06053 (US)
(72) Inventor: Schmitt, Andreas, 35394 Gießen (DE); Bartig, Paul, 35394 Gießen (DE); Dostal, Dominik, 35394 Gießen (DE); Schneider, Joachim, 35394 Gießen (DE); Wissling, Matthias, 35394 Gießen (DE)
(74) Representative: SBD IPAdmin

(56) References cited:
- WO-A1-2006/087984
- WO-A1-2015/086203

## Description

The present disclosure relates to a self-piercing rivet with a head and a shank which has a shank diameter, wherein, at a foot end opposite the head, the shank has an axial recess which has an axial depth, and wherein, at the foot end, the shank comprises an annular piercing end, for the production of a joining connection between at least two workpieces. The self-piercing rivet is in particular directed to thin sheet metal application, notably in the automotive industry.

A self-piercing rivet is partially hollow with a head and a cylindrical shank that terminates in an annular edge. As the rivet is driven into at least two overlapping sheets of material over a suitably shaped die, the shank is caused to flare outwardly. The sheets of material are caused to deform around the shank, creating an annulus that encapsulates the shank. The shank and edge of the rivet remain embedded in the sheet material after the rivet has been set. Self-piercing riveting enables sheet material to be joined without the requirement for the pre-drilling or pre-punching of a hole in the material.

Numerous documents describe a self-piercing rivet, such as for instance EP1387093A1 or WO2014013232 or WO 2006/087984 A1 or US9316243.

Self-piercing riveting as a joining method is widely used in the industry and is currently the main joining method for aluminium and lightweight material automotive structures.

WO2014013232 discloses a method for forming a joint in a stack of at least two sheets of light metal alloy, using a self- piercing rivet that is fully hollow. The rivet is coated at least along a portion of its bore by a lubricant and pierces the upper surface thereof and such that the shank deforms outwardly to interlock with the material but without penetration to the die side of the material. The outside diameter of the shank of the rivet is 5.4mm or less. The die has a volume that is less than 60% or 70% of the effective solid volume of the rivet.

US9316243 describes a self-piercing rivet comprising a head and a substantially cylindrical shank that is at least partially hollow so as to define a bore that extends along at least part of its length, wherein the outside diameter of the shank is at least 6 mm, the effective length of the rivet is at least 1.3 times the diameter of the shank and the bore has a volume that is at least 38% of the effective solid volume of the rivet. Such rivet is suitable for use with thick stack, high strength light metal alloys such as magnesium and aluminium alloys.

However, for doors applications in vehicles, notably for thin aluminium panels, other processes, such as resistance spot welding, compete with self-piercing riveting. Therefore, a need still exists to increase the joining quality and to develop a self-piercing rivet adapted to join workpieces such as door panels and suitable for a simple manufacturing process.

The above-mentioned object is achieved by the self-piercing rivet defined in independent patent claim 1.

The self-piercing rivet comprises a head and a shank which has a shank diameter, wherein at a foot end opposite the head, the shank has an axial recess which has an axial depth and the shank further comprises an annular piercing end. The self-piercing rivet is characterized in that the recess has a recess volume, wherein a ratio of recess volume to volume of shank and head is between 0.01 and 0.06.

Several tests have surprisingly shown that a self-piercing rivet geometry having a ratio of recess volume to volume of shank and head between 0.01 and 0.06 allows to perform a rivet having good joining qualities, notably for door panels, and may be easy to manufacture at low costs. Thus, such self-piercing rivet is adapted to compete with other joining methods. Such ratio allows a straight upsetting and the spreading through the internal geometry (rivet recess), and not over the outer edge, as known with the rivet from the prior art.

According to the invention, the rivet is a cold formed part without any heat or surface treatment. Thus, such self-piercing rivet is easy to manufacture, with a limited number of process steps. The rivet obtains its strength with the cold forming.

Preferably, the recess is arc-shaped. For instance, the recess is at least partly arc-shaped, notably in the area of the recess base, located toward the head. This shape allows a better forming, notably cold-forming and to limit the cold forming steps.

According to an embodiment, a ratio of the axial depth to shank diameter ranges between 0,05 and 0,70, and in particular between 0,05 and 0,66. The axial depth is defined such as to receive a determined amount of material (remaining bottom) and to weaken the self-piercing rivet over a certain height.

According to an embodiment, the annular piercing end hat a piercing diameter and the ratio of piercing diameter to shank diameter ranges between 0,70 and 0,99, and in particular between 0,85 and 0,99. Thus the position of the piercing end enables a correct upsetting and spreading of the rivet.

According to an embodiment, the rivet is made of steel, stainless steel or aluminium alloy. More particularly, a rivet made of an aluminium alloy will be used to join aluminium alloy workpieces.

According to an embodiment, the self-piercing rivet comprises a first section in the vicinity of the head and a second section in the vicinity of the annular piercing end, wherein the material strength of the second section is lower than the material strength of the first section. According to an embodiment, the material strength of the annular piercing end is greater than the material strength of the rest of the shank. Due to the cold forming and the recess geometry, the second section is weakened with regard to the first section.

According to an embodiment, the annular piercing end comprises an outer edge, and wherein the outer edge is sharp-edged with a radius of less than 0.1 mm. This sharp-edged outer edge enables to improve the cutting through aluminium alloy panels or workpieces and can be easily manufactured.

According to an embodiment the recess is at least partly conical or frustroconical, such that the recess comprises a conical taper surface, and wherein the conical taper surface has an inclusive angle in cross section between 75 and 105 degrees, and in particular of 90 degrees. Such recess geometry allows a determined spreading in the workpiece.

According to an embodiment, the recess has a projected surface in cross section, and wherein a ratio of the projected surface to the circular surface of the shank is between 0.05 and 0.25, and in particular between 0.10 and 0.20.

According to a further embodiment which, in conjunction with the preamble of claim 1, constitutes a separate invention, a ratio of the projected surface to the circular surface of the shank is between 0.05 and 0.25, and in particular between 0.10 and 0.20. The special geometry of the rivet and of its recess allows upsetting and spreading the rivet, without any specific heat or surface treatment.

According to an embodiment, the recess has a projected surface in cross section, wherein the rivet has a projected surface in cross-section, and wherein a ratio of the projected surface of the recess to the projected surface of the rivet is between 0.05 and 0.13, and in particular between 0.07 and 0.09. The special geometry of the rivet and of its recess allows upsetting and spreading the rivet, without any specific heat or surface treatment.

The present invention is also directed to a self-piercing riveted joint having an upper workpiece and a lower workpiece from which at least one is realized from a metal, and having a self-piercing rivet as described above, the head of which abuts against the upper workpiece.

According to an embodiment, the upper workpiece and/or the lower workpiece is made of an aluminium alloy. The lower side of the rivet shank is upset and a spreading of the recess geometry of the rivet in the workpiece occurs.

Specific embodiments of the present invention will now be described, by way of example only, with reference to the accompanying drawings in which:
Fig. 1 shows schematically a sectioned view of a self-piercing rivet according to the present invention;
Fig. 2 shows a sectioned view a riveted join using the piercing rivet of Fig. 1.

On the different figures, the same reference signs designate identical or similar elements.

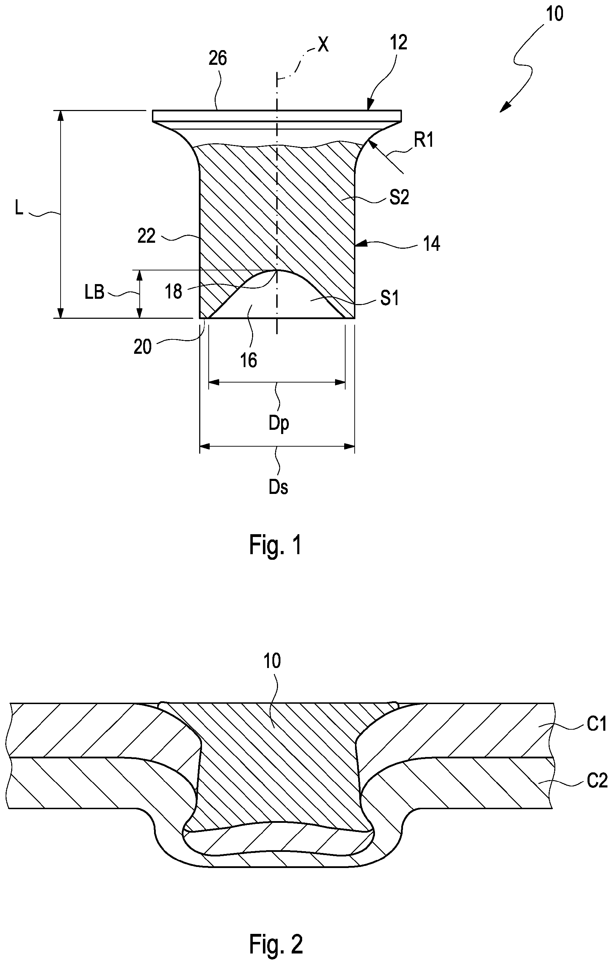

Fig. 1 shows a self-piercing rivet 10 comprising a rivet head 12 and a rivet shank 14 extending along a longitudinal axis X. The self-piercing rivet 10 is suitable for producing a joining connection between at least two components or workpieces C1, C2, as depicted in Fig. 2. For example, one of the workpieces or the two workpieces may be aluminium workpieces, for instance vehicle door panels.

The rivet shank comprises an axial recess (or central bore) 16 having a base 18. The recess 16 is located at the foot end opposite the head 12. The rivet shank 14 further comprises an annular piercing end 20 facing away from the rivet head 12. The recess 16 comprises an axial depth LB between the base 18 of the recess 16 and the annular piercing end 20. More particularly the axial depth LB is the greatest distance along the longitudinal axis X between the base 18 and the annular piercing end 20. For instance, the axial depth LB is the distance between the most upper point of the surface of the base (in other words the point of the base situated the nearest of the upper surface of the head) and the most lower point of the annular piercing end. The axial depth is for instance of 1 mm.

The recess 16 has a volume and the geometry of the self-piercing rivet is such that a ratio recess volume to volume of the shank and the head (in other word the entire volume of the solid rivet) is between 0.01 and 0.06 or 0.01 and 0.05. More particularly, the ratio can be in the range of 0.047 to 0.049. The recess volume in this case is calculated starting from the foot end of the self-piercing rivet. The volume of the solid rivet is that volume of the rivet shank 14, of the rivet head 12, inclusive a possible transition section to a head of the self-piercing rivet, and excluding the recess volume which is consequently not contained in the volume of the shank.

The rivet shank 14 comprises a cylindrical shank outer surface 22. The shank outer surface has a shank diameter Ds. The shank has a uniform shank diameter. For instance, the shank diameter may be between 3 and 5 mm, and for example of 3.3 mm or 3.5 mm. A ratio of the axial depth LB to shank diameter Ds can range between 0,05 and 0,70, and in particular between 0,05 and 0,66.

The rivet head 12 extends radially outward from the rivet shank 14. The rivet head 12 has an upper portion 26 and a transition region defined between the upper portion 26 and the rivet shank 14. The transition region has a radius of curvature R1 in the range 0.5 to 2 mm, for example a radius of curvature of 1 mm or 1.8 mm. The upper portion 26 has an upper surface opposite the base 18. The thickness of the upper portion 26 is comprised between 0.1 and 0.3 mm, and is notably of 0.25mm.

The rivet has a length along the longitudinal axis X. The length of the rivet from the annular piercing end 20 to the head (and more particularly the upper surface of the upper portion of the head 12) is between 4 and 6 mm, or between 3.5 and 5 mm, and for example of 4 or 4.5 mm.

As illustrated in the drawing, the base 18 can be arc-shaped. For instance, the base can have a radius between 0.05 of the shank diameter and 4 mm. The base 18 may also be between conical. More particularly, the base can be arc-shaped, and the recess can be partly frustroconical. The recess may comprise conical taper surface having an inclusive angle in cross section between 75 and 105 degrees, and more particularly of 90 degrees.

The annular piercing end 20 can be a flat shank end face, as depicted in Fig. 1. As shown in Fig. 1, the annular piercing end comprises an outer edge. The outer edge is sharp-edged with a radius of less than 0.1 mm. the inner edge forms a cutting line comprising a cutting or piercing diameter. The ratio of piercing diameter Dp to shank diameter Ds ranges between 0,70 and 0,99, and in particular between 0,85 and 0,99.

The annular piercing end 20 may also be an arcuate shank end face. For example, the annular piercing end may comprise a circular cutter with a cutting diameter, the circular cutter being formed by a cutting line between a radius or a chamfer in the region of an inside surface of the axial recess and a radius toward a radial outside surface of the shank.

The self-piercing rivet is formed by cold-forming. No heat or surface treatment is applied to the self-piercing rivet 10 after the cold forming. More particularly, the rivet according to the invention does not need any further treatment to improve its strength material and assure a good joining in aluminium panels notably without such treatments. The strength of the self-piercing rivet is obtained through the cold forming and its geometry. Thus, the cold forming gives to the rivet its strength properties.

More particularly, the self-piercing rivet 10 comprises a first section in the vicinity of the head and a second section in the vicinity of the annular piercing end 20. The strength of the second section is lower than the strength of the first section.

The recess 16 forms a projected surface S1 in a longitudinal cross section plan (as illustrated in Fig. 1). The solid rivet comprises a projected surface S1 in the same plan. The projected surface S2 is that surface formed by the shank 14 and the head 12, including the transition region. A ratio of the projected surface S1 of the recess to the projected surface S2 of the rivet can be between 0.05 and 0.13, and in particular between 0.07 and 0.09. Besides, a ratio of the projected surface S1 of the recess to the circular surface of the shank is between 0.05 and 0.25, and in particular between 0.10 and 0.20.

The self-piercing rivet 10 is used in a self-piercing riveted joint, as shown in Fig. 2. The self-piercing riveted joint comprises an upper workpiece C1 and a lower workpiece C2 from which at least one is realized from a metal, and notably in an aluminium alloy. The head 12 abuts against the upper workpiece C1. The lower side of the rivet shank is upset and a spreading of the recess geometry of the rivet in the workpiece occurs. The self-piercing rivet 10 of the invention, as depicted in Fig. 2, does not comprise a determined spreading due to a thin defined cutting edge (as known for the self-piercing rivet of the state of the art), but the connection or joining of the two workpieces in made through upsetting the rivet by a die in its lower area and the spreading of the rivet through the recess geometry with determined taper surfaces. The internal geometry allows the workpiece material to "slide" and thus forms an internal pressure. The spreading is assisted through the straight upsetting.

## Claims

1. Self-piercing rivet (10) with a head and a shank which has a shank diameter (Ds), wherein, at a foot end opposite the head, the shank has an axial recess which has an axial depth (LB) and the shank (14) further comprises an annular piercing end (20), **characterized in that** the recess has a recess volume, wherein a ratio of recess volume to volume of the shank and the head is between 0.01 and 0.06, wherein the rivet is a cold formed part without any heat or surface treatment.

2. Self-piercing rivet (10) according to claim 1, wherein the recess is arc-shaped.

3. Self-piercing rivet (10) according to any of claims 1 to 2, wherein a ratio of the axial depth (LB) to shank diameter (Ds) ranges between 0,05 and 0,70.

4. Self-piercing rivet (10) according to any of claims 1 to 3, wherein the annular piercing end hat a piercing diameter (Dp) and the ratio of piercing diameter (Dp) to shank diameter (Ds) ranges between 0,70 and 0,99.

5. Self-piercing rivet (10) according to any of claims 1 to 4, wherein the rivet is made of steel, stainless steel or aluminium alloy.

6. Self-piercing rivet (10) according to any of claims 1 to 5, material strength of the annular piercing end is greater than the material strength of the rest of the shank.

7. Self-piercing rivet (10) according to any of claims 1 to 6, wherein the annular piercing end comprises an outer edge, and wherein the outer edge is sharp-edged with a radius of less than 0.15 mm.

8. Self-piercing rivet (10) according to any of claims 1 to 7, wherein the recess is at least partly conical or frustroconical, such that the recess comprises a conical taper surface, and wherein the conical taper surface has an inclusive angle in cross section between 75 and 105 degrees.

9. Self-piercing rivet (10) according to any of claims 1 to 8 or according to the preamble of claim 1, wherein the recess has a projected surface in cross section, and wherein a ratio of the projected surface to the circular surface of the shank is between 0.05 and 0.25.

10. Self-piercing rivet (10) according to any of claims 1 to 9, wherein the recess has a projected surface in cross section, wherein the rivet has a projected surface in cross-section, and wherein a ratio of the projected surface of the recess to the projected surface of the rivet is between 0.05 and 0.13.

11. Self-piercing riveted joint having an upper workpiece and a lower workpiece from which at least one is realized from a metal, and having a self-piercing rivet (10) according to any of claims 1 to 10, the head of which abuts against the upper workpiece.

12. Self-piercing riveted joint according to claim 11, wherein the upper workpiece and/or the lower workpiece (C1, C2) is made of an aluminium alloy.

## Patentansprüche

1. Stanzniet (10) mit einem Kopf und einem Schaft, der einen Schaftdurchmesser (Ds) aufweist, wobei, an einem Fußende gegenüber dem Kopf, der Schaft eine axiale Aussparung aufweist, die eine axiale Tiefe (LB) aufweist, und der Schaft(14) weiter ein ringförmiges Stanzende (20) umfasst, **dadurch gekennzeichnet, dass** die Aussparung ein Aussparungsvolumen aufweist, wobei ein Verhältnis von Aussparungsvolumen zu Volumen des Schafts und des Kopfs zwischen 0,01 und 0,06 ist, wobei der Niet ein kaltgeformter Teil ist, ohne jede Hitze- oder Oberflächenbehandlung.

2. Stanzniet (10) nach Anspruch 1, wobei die Aussparung bogenförmig ist.

3. Stanzniet (10) nach einem der Ansprüche 1 bis 2, wobei ein Verhältnis der axialen Tiefe (LB) zu Schaftdurchmesser (Ds) im Bereich zwischen 0,05 und 0,70 liegt.

4. Stanzniet (10) nach einem der Ansprüche 1 bis 3, wobei das ringförmige Stanzende einen Stanzdurchmesser (Dp) aufweist und das Verhältnis von Stanzdurchmesser (Dp) zu Schaftdurchmesser (Ds) im Bereich zwischen 0,70 und 0,99 liegt.

5. Stanzniet (10) nach einem der Ansprüche 1 bis 4, wobei der Niet aus Stahl, rostfreiem Stahl oder Aluminiumlegierung hergestellt ist.

6. Stanzniet (10) nach einem der Ansprüche 1 bis 5, wobei die Materialstärke des ringförmigen Stanzendes größer als die Materialstärke des restlichen Schafts ist.

7. Stanzniet (10) nach einem der Ansprüche 1 bis 6, wobei das ringförmige Stanzende eine äußere Kante umfasst, und wobei die äußere Kante scharfkantig mit einem Radius von weniger als 0,15 mm ist.

8. Stanzniet (10) nach einem der Ansprüche 1 bis 7, wobei die Aussparung mindestens teilweise konisch oder kegelstumpfförmig ist, so dass die Aussparung eine konische Abschrägungsfläche umfasst, und wobei die konische Abschrägungsfläche einen eingeschlossenen Winkel im Querschnitt zwischen 75 und 105 Grad aufweist.

9. Stanzniet (10) nach einem der Ansprüche 1 bis 8 oder nach dem Oberbegriff von Anspruch 1, wobei die Aussparung eine projizierte Oberfläche im Querschnitt aufweist, und wobei ein Verhältnis der projizierten Oberfläche zur kreisförmigen Oberfläche des Schafts zwischen 0,05 und 0,25 ist.

10. Stanzniet (10) nach einem der Ansprüche 1 bis 9, wobei die Aussparung eine projizierte Oberfläche im Querschnitt aufweist, wobei der Niet eine projizierte Oberfläche im Querschnitt aufweist, und wobei ein Verhältnis der projizierten Oberfläche der Aussparung zur projizierten Oberfläche des Nietes zwischen 0,05 und 0,13 ist.

11. Stanzgenietete Verbindung, aufweisend ein oberes Werkstück und ein unteres Werkstück, von denen mindestens eines aus einem Metall hergestellt ist, und aufweisend einen Stanzniet (10) nach einem der Ansprüche 1 bis 10, dessen Kopf gegen das obere Werkstück stößt.

12. Stanzgenietete Verbindung nach Anspruch 11, wobei das obere Werkstück und/oder das untere Werkstück (C1, C2) aus einer Aluminiumlegierung hergestellt ist.

## Revendications

1. Rivet autoperforant (10) avec une tête et une tige qui présente un diamètre de tige (Ds), dans lequel, au niveau d'une extrémité de pied opposée à la tête, la tige présente un renfoncement axial qui présente une profondeur axiale (LB) et la tige (14) comprend en outre une extrémité de perçage annulaire (20), **caractérisé en ce que** le renfoncement présente un volume de renfoncement, dans lequel un rapport entre le volume de renfoncement et le volume de la tige et de la tête est entre 0,01 et 0,06, dans lequel le rivet est une partie formée à froid sans aucun traitement thermique ou de surface.

2. Rivet autoperforant (10) selon la revendication 1, dans lequel le renfoncement est en forme d'arc.

3. Rivet autoperforant (10) selon l'une quelconque des revendications 1 à 2, dans lequel un rapport entre la profondeur axiale (LB) et le diamètre de tige (Ds) est dans la plage entre 0,05 et 0,70.

4. Rivet autoperforant (10) selon l'une quelconque des revendications 1 à 3, dans lequel l'extrémité de perçage annulaire présente un diamètre de perçage (Dp) et le rapport entre le diamètre de perçage (Dp) et le diamètre de tige (Ds) est dans la plage entre 0,70 et 0,99.

5. Rivet autoperforant (10) selon l'une quelconque des revendications 1 à 4, dans lequel le rivet est fait d'acier, d'acier inoxydable ou d'alliage d'aluminium.

6. Rivet autoperforant (10) selon l'une des revendications 1 à 5, la résistance du matériau de l'extrémité de perçage annulaire est supérieure à la résistance du matériau du reste de la tige.

7. Rivet autoperforant (10) selon l'une quelconque des revendications 1 à 6, dans lequel l'extrémité de perçage annulaire comprend un bord extérieur, et dans lequel le bord extérieur est tranchant avec un rayon inférieur à 0,15 mm.

8. Rivet autoperforant (10) selon l'une quelconque des revendications 1 à 7, dans lequel le renfoncement est au moins partiellement conique ou tronconique, de sorte que le renfoncement comprend une surface effilée conique, et dans lequel la surface effilée conique présente un angle inclus dans la coupe transversale entre 75 et 105 degrés.

9. Rivet autoperforant (10) selon l'une quelconque des revendications 1 à 8 ou selon le préambule de la revendication 1, dans lequel le renfoncement présente une surface projetée en coupe transversale, et dans lequel un rapport entre la surface projetée et la surface circulaire de la tige est entre 0,05 et 0,25.

10. Rivet autoperforant (10) selon l'une des revendications 1 à 9, dans lequel le renfoncement présente une surface projetée en coupe transversale, dans lequel le rivet présente une surface projetée en coupe transversale, et dans lequel un rapport entre la surface projetée du renfoncement et la surface projetée du rivet est entre 0,05 et 0,13.

11. Joint riveté autoperforant présentant une pièce supérieure et une pièce inférieure parmi lesquelles au moins une est réalisée à partir d'un métal, et présentant un rivet autoperforant (10) selon l'une quelconque des revendications 1 à 10, dont la tête vient en butée contre la pièce supérieure.

12. Joint riveté autoperforant selon la revendication 11, dans lequel la pièce supérieure et/ou la pièce inférieure (C1, C2) est faite d'un alliage d'aluminium.
